# EUROPÄISCHE PATENTSCHRIFT

(11) **EP 3 906 608 B1**
(45) Veröffentlichungstag und Bekanntmachung des Hinweises auf die Patenterteilung: **08.07.2026**
(21) Anmeldenummer: 20710858.0
(22) Anmeldetag: 05.03.2020
(51) Int. Cl.: H02K 5/18, H02K 9/06, H02K 9/14, H02K 11/33, F04D 17/02, F04D 19/02, F04D 29/38

(54) **ANTRIEBSEINHEIT MIT EINER KÜHLEINHEIT**
DRIVE UNIT WITH A COOLING UNIT
UNITÉ D'ENTRAÎNEMENT D'UNE UNITÉ DE REFROIDISSEMENT

(30) Priorität: 04.04.2019 EP 19167304
(43) Veröffentlichungstag der Anmeldung: 10.11.2021
(73) Patentinhaber: Innomotics GmbH, 90441 Nürnberg (DE)
(72) Erfinder: DEEG, Christian, 90518 Altdorf (DE); KUHN, Harald, 90482 Nürnberg (DE); MAIDORN, Mischa, 90547 Stein (DE); MÄCHTEL, Stefan, 91334 Hemhofen-Zeckern (DE); TISCHMACHER, Hans, 91207 Lauf (DE)
(74) Vertreter: Michalski Hüttermann & Partner mbB
(86) Internationale Anmeldenummer: PCT/EP2020/055863
(87) Internationale Veröffentlichungsnummer: WO 2020/200630

(56) Entgegenhaltungen:
- EP-A1- 0 854 560
- EP-A2- 1 511 157
- CN-Y- 2 495 058
- DE-A1- 102012 206 199
- JP-A- S60 152 247
- US-A1- 2015 130 386
- US-A1- 2016 006 325
- US-A1- 2018 106 259
- US-A1- 2019 060 957

## Beschreibung

Die Erfindung betrifft eine Antriebseinheit mit einer dynamoelektrischen Maschine zumindest einem elektronischen Anbauteil und zumindest einer Kühleinheit.

Derartige Antriebseinheiten sind beispielsweise aus der DE 198 12 729 A1 bekannt. Die Erfindung beschreibt einen Elektromotor, insbesondere mit einem Lüfterrad zur Bildung eines Axial- oder Radiallüfters, mit einer Antriebseinheit und einer ein Steuerungsgehäuse aufweisenden Steuereinheit, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Die Erfindung beschreibt einen kollektorlosen Gleichstrom-Außenläufermotor, der aus einem an einem Motorflansch befestigten Stator mit Statorwicklungen, einem den Stator auf seiner dem Motorflansch abgekehrten Seite umschließenden Außenläufer sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden. Der Kühlkörper bildet mit der Leiterplatte und einem die Leiterplatte halternden Trägerelement eine vormontierte Baugruppe.

Aus der US 2016/0006325 A1 ist ein Antrieb bekannt, der zumindest eine dynamoelektrische rotatorische Maschine, mit zumindest einem elektronischen Anbauteil aufweist, das in einer geschlossenen Gehäuseanordnung positioniert ist und dort eine Lüftereinheit aufweist. Diese Komponenten sind axial hintereinander angeordnet, indem das elektronische Anbauteil axial zwischen einer dynamoelektrischen rotatorischen Maschine und Lüftereinheit angeordnet ist, wobei zumindest zwischen Gehäuseanordnung und Lüftereinheit und/oder zwischen Gehäuseanordnung und Lagerschild der dynamoelektrischen rotatorischen Maschine und/oder zwischen Gehäuseanordnung und einer Welle der dynamoelektrischen rotatorischen Maschine Freiräume vorgesehen sind, wobei im Betrieb der Lüftereinheit aufgrund eines Hauptströmungspfades Lüfterhaube, Oberfläche des elektronischen Anbauteils und des Motorgehäuses und mittels des Venturieffekts die Freiräume ebenfalls mit einem Kühlluftstrom beaufschlagbar sind.

Aus der DE 10 2012 206 199 A1 ist eine elektrische Maschine mit einem Lüfterrad bekannt, das auf der Rotorwelle der elektrischen Maschine drehfest sitzt, wobei in den Rotor der elektrischen Maschine mindestens ein Kühlkanal eingebracht ist, der auf der dem Lüfterrad zugewandten Seite mit einem ersten Strömungsweg kommuniziert.

Aus der CN 2495058 Y ist eine axiale Anordnung von dynamoelektrischer Maschine, elektronische Anbauteil und Lüftereinheit bekannt.

Ausgehend davon liegt der Erfindung die Aufgabe zugrunde, eine kompakte Antriebseinheit zu schaffen, die eine ausreichende Kühlung der Antriebseinheit gewährleistet.

Die Lösung der gestellten Aufgabe gelingt durch einen Antrieb gemäß den Merkmalen nach Anspruch 1.

Weitere Ausgestaltungen sind den abhängigen Ansprüchen zu entnehmen. Dabei ist erfindungsgemäß nunmehr eine Kühlwirkung über den Hauptströmungspfad als auch über diese Freiräume vorgesehen, in denen aufgrund des Venturieffekts ebenfalls eine Luftströmung generiert wird, die zur Kühlung der benachbarten Antriebskomponenten beiträgt. Damit werden Wärmestauungen in diesen Freiräumen vermieden.

Das erfindungsgemäße Kühlungskonzept erhält eine Unterstützung, indem die Lüftereinheit als ein Zwei-Zonen-Lüfter ausgeführt ist, der mit einer Welle drehfest verbunden ist. Damit werden im Betrieb der dynamoelektrischen rotatorischen Maschine zwei voneinander unabhängig verlaufende Luftströme erzeugt. Somit kann der Antrieb erfindungsgemäß, insbesondere in axialer Richtung noch kompakter ausgeführt werden.

Der Zwei-Zonen-Lüfter weist eine erste Zone im Bereich der Nabe des Lüfters auf, die im Wesentlichen eine axiale Luftströmung generiert. Radial daran schließt sich an dem Lüfter eine zweite Zone an, die im Wesentlichen eine radiale Luftströmung generiert. Diese radiale Luftströmung generiert den Hauptströmungspfad, wobei von der angesaugten Luft ca. 80 bis 90% in den Hauptströmungspfad gelangen.

Die Freiräume und/oder die den Hauptströmungspfad flankierenden Komponenten weisen oberflächenvergrößernde Strukturen auf, die im Wesentlichen parallel zu den jeweiligen Strömungspfaden ausgerichtet sind. So sind dies an einem Lagerschild und die Gehäuseanordnung insbesondere radial verlaufende Rippen. Damit wird die Kühleffizienz gesteigert.

Weitere Maßnahmen zur Kühleffizienzsteigerung ergeben sich dadurch, dass ein die dynamoelektrische rotatorische Maschine umgebendes Gehäuse zumindest am Außenumfang abschnittsweise Rippen aufweist. Eine zusätzliche Lüfterhaube, die auch als Leitvorrichtung des Hauptströmungspfades dient, verstärkt den Venturieffekt, indem sie sich zumindest über das elektronische Anbauteil und ca. 30% der axialen Länge des Gehäuses der dynamoelektrischen rotatorischen Maschine ausgehend von einem BS-Lagerschild erstreckt.

Das elektronische Anbauteil weist Komponenten auf, die als Steller oder Umrichter ausgeführt sind.

Damit ergibt sich ein sehr kompakter und leistungsfähiger Antrieb, dessen Komponenten, insbesondere die elektronischen Anbauteile über die Gehäuseanordnung, als auch die dynamoelektrische rotatorische Maschine, wie Stator und Rotor und die dazwischen auftretenden Freiräumen kühlt.

Die Gehäuseanordnung ist aus vergleichsweise thermisch gut leitfähigem Material, wie beispielsweise Aluminium oder Aluminiumlegierungen.

Die Gehäuseanordnung kann zylindrisch oder auch trichterförmig ausgebildet sein, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann.

Die Gehäuseanordnung weist eine Aussparung auf, durch die eine Welle ragt, die u.a**.** die Antriebswelle der Kühleinheit, insbesondere eines Lüfters bildet.

Die Steller- oder Umrichterkomponenten können insbesondere auch ausschließlich im zylindrischen Abschnitt der Gehäuseanordnung angeordnet sein, in diesem Fall wirkt der sich axial verjüngenden Abschnitt als Wärmekapazität, die eine wärmepuffernde Wirkung aufweist. Damit wird auch bei wechselnden Betriebszuständen eine ausreichende Kühlung des Antriebs gewährleistet.

Der Rotor der dynamoelektrischen rotatorischen Maschine wird u.a**.** auch über die Welle gekühlt. Außerdem wird Wärme des Rotors auch an den Innenraum der dynamoelektrischen rotatorischen Maschine abgegeben, sodass sich die Lagerschilde, Lager und Gehäuse dadurch ebenfalls erwärmen können. Dieser Wärmeeintrag aus den Freiräumen wird durch die das Gehäuse und die Lagerschilde umströmende Luft, insbesondere durch die Luftströmung des Venturieffekts abgeführt.

Der Stator der dynamoelektrischen rotatorischen Maschine erzeugt ebenso Wärme, die u.a**.** den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Gehäusemantel eingeschrumpft, um einen vergleichsweise guten Wärmeübergang vom Blechpaket des Stators auf das Gehäuse und die Gehäuserippen zu erhalten. Von dort führt dann zum überwiegenden Teil der Hauptluftstrom die Wärme ab.

Die als Eigenlüfter ausgeführte Kühleinheit generiert im Betrieb der dynamoelektrischen rotatorischen Maschine einen oder mehrere Kühlluftströme, der radial und/oder axial entlang zumindest der Oberfläche der Gehäuseanordnung und die Freiräume strömt.

Die Erfindung sowie weitere vorteilhafte Ausgestaltungen der Erfindung werden anhand prinzipieller dargestellter Ausführungsbeispiele näher dargestellt; darin zeigen:
- FIG 1: einen prinzipiellen Längsschnitt eines erfindungsgemäßen Antriebs,

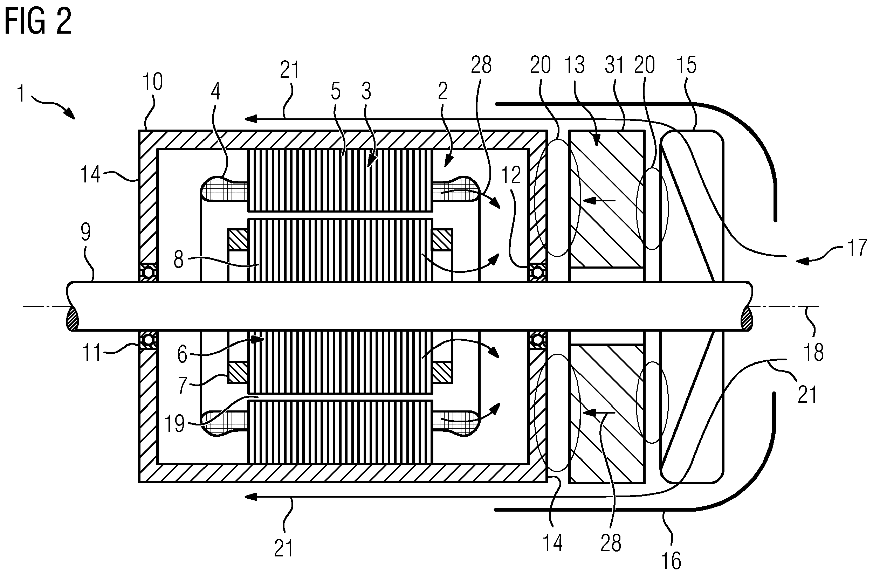

- FIG 2: einen prinzipiellen Längsschnitt eines erfindungsgemäßen Antriebs mit Bereichen, wo sich Wärmeansammlungen entwickeln können,
- FIG 3: einen prinzipiellen Längsschnitt eines Antriebs mit Kühlluftströmen,
- FIG 4: Vorderansicht des Zwei-Zonen-Lüfters,
- Fig 5: Seitenansicht des Zwei-Zonen-Lüfters,
- FIG 6: Vorderansicht des Zwei-Zonen-Lüfter mit Lüfterelementen,
- FIG 7: perspektivische Darstellung des Zwei-Zonen-Lüfters,
- FIG 8: Vorderansicht des Zwei-Zonen-Lüfters mit Schnittebene,
- FIG 9: geschnittene Seitenansicht des Zwei-Zonen-Lüfters,
- FIG 10: Detaildarstellung.

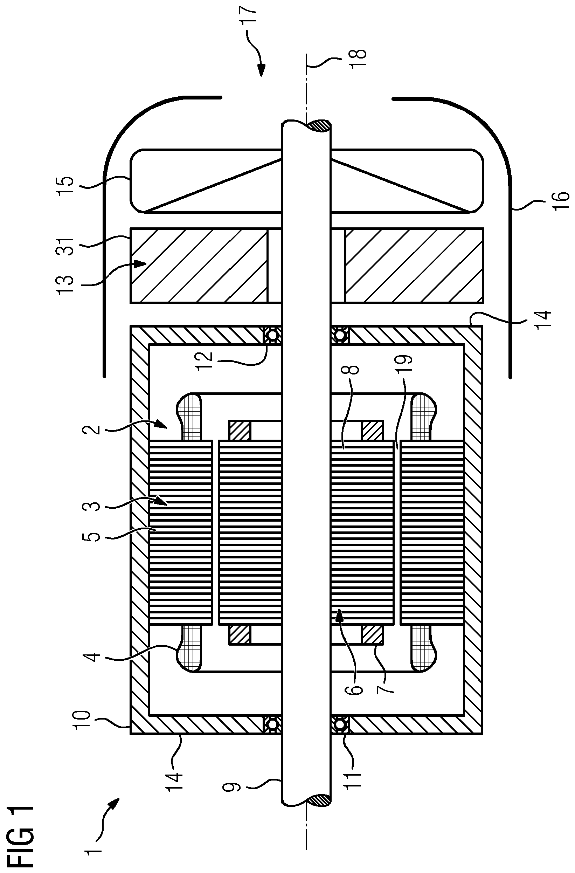

FIG 1 zeigt einen Antrieb 1 mit einer dynamoelektrischen rotatorischen Maschine 2, die einen Stator 3 mit einem Blechpaket 5 aufweist. In dem Blechpaket 5 des Stators 3 ist, einem Luftspalt 19 zugewandt, ein Wicklungssystem angeordnet, das an den Stirnseiten des Blechpakets 5 des Stators 3 Wickelköpfe 4 ausbildet. Drehfest mit einer Welle 9 ist ein Blechpaket 8 eines Rotors 6 verbunden, das in elektromagnetischer Wechselwirkung mit einem bestromten Wicklungssystem des Stators 3 steht und so zu einer Rotation der Welle 9 um eine Achse 18 führt.

Die Welle 9 ist in zwei Lagern drehfest gehalten, einem AS-Lager 11 (der anzutreibenden Arbeitsmaschine zugewandt) und einem BS-Lager 12 (der anzutreibenden Arbeitsmaschine abgewandt). Die dynamoelektrische rotatorische Maschine 2 ist von einem Gehäuse 10 umgeben, das an den Stirnseiten von Lagerschilden 14 begrenzt ist. Axial von der BS-Seite beabstandet und einen Freiraum bildend, befindet sich ein elektronisches Anbauteil 13, das zumindest Komponenten eines Umrichters oder Stellers beinhaltet. Das elektronische Anbauteil 13 ist ortsfest und nicht mit der Welle 9 drehfest verbunden. Das elektronische Anbauteil 13 ist mechanisch mit dem BS-Lagerschild 14 und/oder mit dem Gehäuse 10 verbunden und in einer Gehäuseanordnung 31 untergebracht. Ebenso werden unter Einhaltung der jeweiligen Schutzklasse die Versorgungsleitungen und/oder die Sensorleitungen über das Lagerschild und/oder das Gehäuse 10 verlegt.

Axial daran schließt sich ein Zwei-Zonen-Lüfter 15 an, der wiederum drehfest mit der Welle 9 verbunden ist und Kühlluftströme generiert, die zumindest zum Teil durch eine Lüfterhaube 16 geführt sind. Die Zuluft wird über eine Ansaugöffnung 17 der Lüfterhaube 16 dem Lüfter 15 zugeführt.

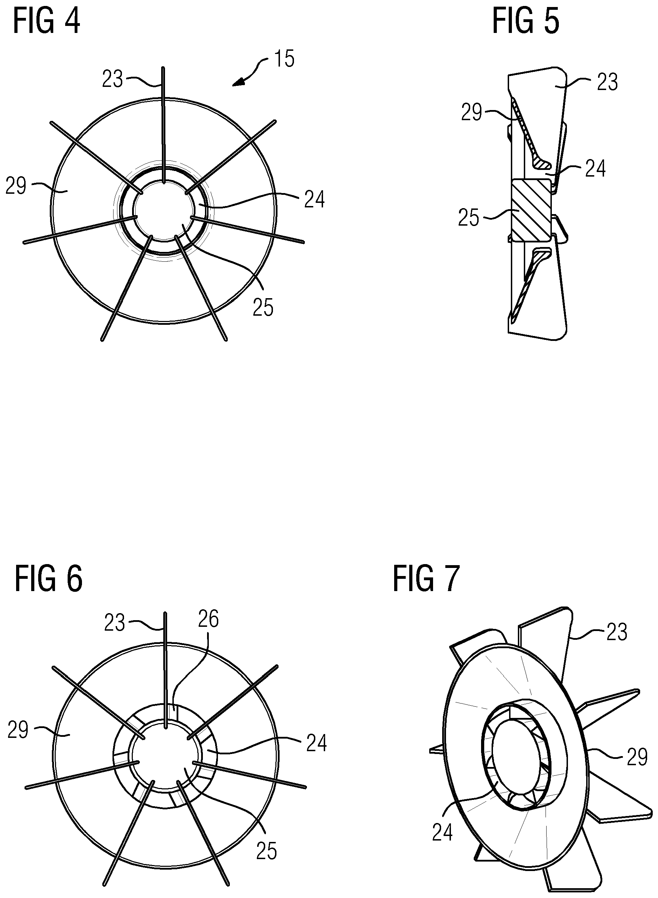

Bei dem Antrieb 1, insbesondere zwischen dem elektronischen Anbauteil 13 und dem zugewandten Lagerschild 14, und/oder zwischen einer Deckscheibe 22 eines Lüfters 15 gemäß FIG 4 und dem elektronischen Anbauteil 13, also in den Freiräumen treten im Betrieb des Antriebs 1 Wärmeansammlungen 20 auf. Es kann somit - ergänzend zur eigenen Wärmeentwicklung - auf das elektronische Anbauteil 13 von beiden axialen Seiten ein zusätzlicher Wärmeeintrag erfolgen. So führt Verlustwärme aus dem Umrichter oder Steller, als auch Wärme aus der Maschine 2 über das Lagerschild 14 zu diesen Wärmeansammlungen 20. Die Wärme aus der Maschine 2 setzt sich u.a. aus der Verlustwärme von Stator 3 und Rotor 6 zusammen. Diese heizt zusätzlich die benachbarten Lager 11, 12 auf, was den Schmierstoff der Lager 11, 12 beeinträchtigt, den Schmiereigenschaften schadet und zu verkürzten Nachschmierfristen der Lager 11, 12 führt.

Die Wärme wird auch über die Welle 9, insbesondere aus dem Rotor 6 der dynamoelektrischen rotatorischen Maschine 2 transportiert und dem Lüfter 15 zugeführt, der dabei als Wärmeabgabeelement fungiert. Der Lüfter 15 - als Eigenlüfter - erzeugt normalerweise nur im Betrieb der dynamoelektrischen rotatorischen Maschine 2 einen Kühlluftstrom, da Lüfter 15 und Welle 9 drehfest gekoppelt sind.

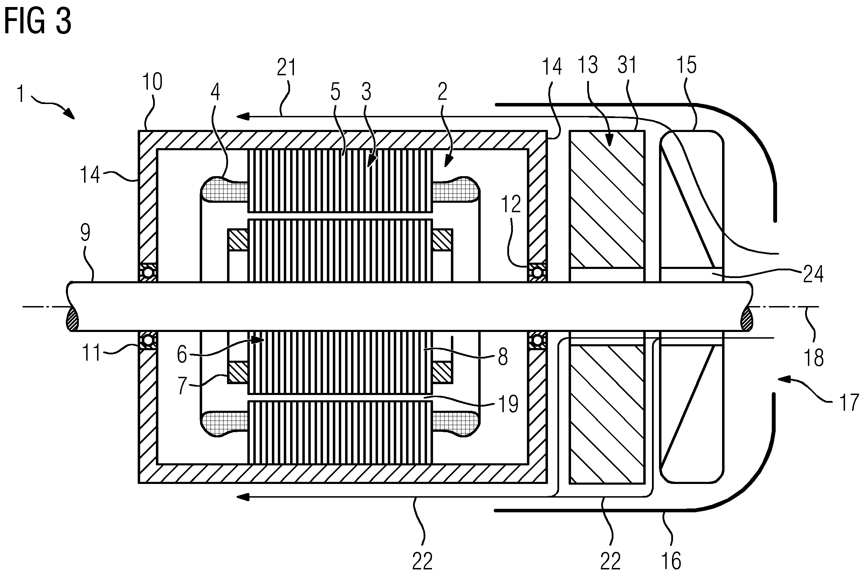

FIG 3 zeigt nunmehr beispielhaft die Kühlluftströme, die durch eigens vorgesehene Freiräume bzw. Kühlmittelpfade insbesondere zur Verringerung der Wärmeansammlung 20 führen.

Zur Verdeutlichung des Verlaufs der Kühlluftströme zeigt FIG 3 oberhalb des Achse 18 einen Hauptkühlluftstrom 21 (Lüfterhaube 16, Oberfläche des elektronischen Anbauteils 13 und Gehäuse 10) und unterhalb der Achse 18, die u.a. durch den Venturieffekt und/oder einer ersten Zone des Lüfters verursachten Kühlluftströme 22. In der Realität sind diese Kühlluftströme 21, 22 am gesamten Umfang vorhanden.

FIG 4 zeigt in einer Frontansicht den Zwei-Zonen-Lüfter 15, mit einer Nabe 25, die mit der Welle 9 drehfest verbunden ist. Des Weiteren erstrecken sich ausgehend von der Nabe 25 radial angeordnete Lüfterschaufeln 23, die mit ihrer Schmalseite gemäß FIG 5 an einer Scheibe 29 angeordnet sind. Um die Nabe 25 angeordnet befindet sich ein Durchlass 24.

FIG 6 zeigt Lüfterelemente 26, die in dem Durchlass 24 angeordnet sind und die vor allem eine axiale Luftströmung generieren, die den oben beschriebenen Venturieffekt unterstützt. FIG 7 zeigt die Anordnung der Lüfterelemente 26 in einer perspektivischen Darstellung.

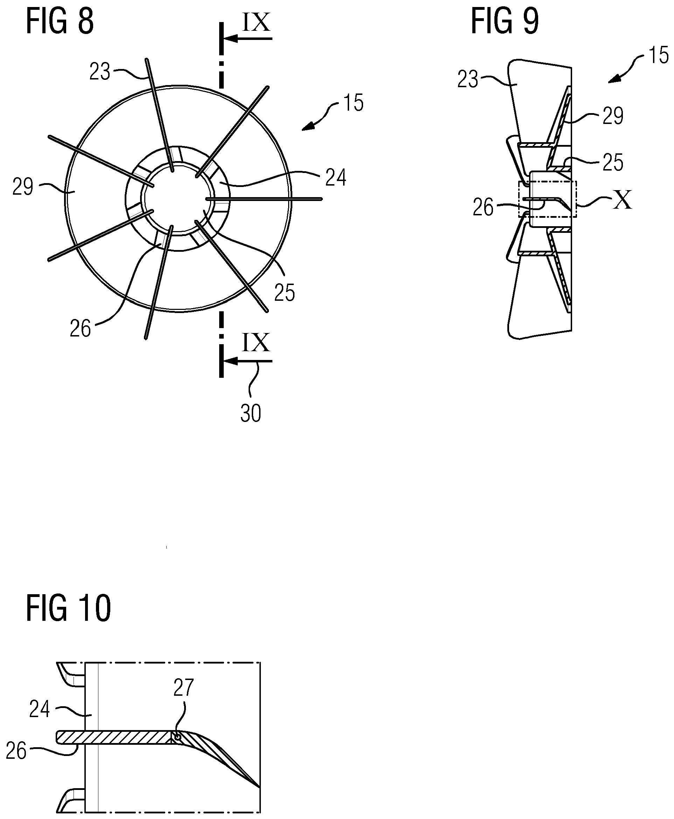

FIG 8 zeigt den Schnitt IX durch den Zwei-Zonen-Lüfter 15, wobei FIG 9 diese Schnittansicht zeigt. Im Durchlass 24 befinden sich Lüfterelemente 26, die über ein Gelenk 27 gemäß FIG 10 verfügen. Damit kann der Zwei-Zonen-Lüfter unabhängig von der Drehrichtung axial fördern. Das Gelenk 27 weist im elastischen Bereich eine ausreichende Rückstellkraft auf, um eine axiale Förderung beizubehalten.

Durch den erfindungsgemäßen Einsatz des Zwei-Zonen-Lüfters 15, wird auch in den Freiräumen - unterstützt durch den Venturieffekt - eine ausreichende Kühlung gewährleistet. Die Wärmeansammlungen 20 werden somit vermieden.

Um auch bei Niedrigdrehzahl der dynamoelektrischen rotatorischen Maschine 2 eine ausreichende Kühlung der Komponenten des Antriebs 1 zu erhalten, kann der mit der Welle 9 gekoppelte Zwei-Zonen-Lüfter auch noch einen Fremdlüfter aufweisen.

Die Innenseite des zylindrischen Abschnitts und/oder des sich axial verjüngenden Abschnitt der Gehäuseanordnung 31 ist polygonal ausgeführt, um Steller- oder Umrichterkomponenten des elektronischen Anbauteils 13 direkt an der Innenseite der Gehäuseanordnung 31 anordnen zu können. Damit wird eine vergleichsweise thermisch gute Anbindung gewährleistet.

Die Steller- oder Umrichterkomponenten können insbesondere auch ausschließlich im zylindrischen Abschnitt angeordnet sein, in diesem Fall wirkt der sich axial verjüngenden Abschnitt als Wärmekapazität, der eine thermisch puffernde Wirkung aufweist. Dieser Abschnitt ist dann als Vollmaterial ausgeführt.

Der Antrieb 1 bzw. die Antriebseinheit ist grundsätzlich kompakt aufgebaut. Dabei können die vorab beschriebenen und die folgenden Merkmale einzeln oder in beliebiger Kombination zur Gestaltung des Antriebs 1 angezogen und zusammengestellt werden. Dabei soll der kompakte Antrieb 1 u.a. bestmöglich gekühlt werden.

Dazu wird an die dynamoelektrische rotatorische Maschine 2 axial zumindest ein elektronisches Anbauteil 13 oder Komponenten davon, wie ein oder mehrere Leistungshalbleiter, Drosseln, Kondensatoren und Regelungsbausteine, vorgesehen. Diese Komponenten des elektronischen Anbauteils 13 sind in einer geschlossenen Gehäuseanordnung 31 angeordnet. Eine Kühlung des Antriebs 1 und seiner jeweiligen Abschnitte/Teile erfolgt durch eine oder mehrere Kühleinheiten, die als Flüssigkeitskühlung (Kühlmantel an Gehäuseanordnung 31 und/oder am Gehäuse 10 der dynamoelektrische rotatorische Maschine 2) realisiert werden kann. Vorzugsweise wird eine Luftkühlung vorgesehen, deren Lüfter 15 an der der dynamoelektrischen rotatorischen Maschine 2 abgewandten Seite der Gehäuseanordnung 31 angeordnet ist, so dass eine axiale Reihenfolge von Lüfter 15, Gehäuseanordnung 31 des elektronischen Anbauteils 13 und dynamoelektrischer rotatorischer Maschine 2 vorliegt.

Zur Verbesserung des Kühleffekts sind oberflächenvergrößernde Maßnahmen an der Gehäuseanordnung 31 und/oder dem Gehäuse 10 der dynamoelektrischen rotatorischen Maschine 2 vorgesehen. Dabei sind dort Rippen, Noppen oder zusätzliche Wärmekapazitäten in Form von Gehäuseerweiterung vorgesehen, die Wärmelasten bei dementsprechendem Betrieb des Antriebs 1 puffern können.

Außerdem wird durch spezielle Gestaltung bzw. Aussparungen zwischen dynamoelektrischer rotatorischer Maschine 2, insbesondere deren Lagerschild 14 und der Gehäuseanordnung Kühlkanäle geschaffen, die durch dementsprechende Gestaltung und einem Hauptluftstrom einen zur Kühlung betragenden Venturieffekt in den Aussparungen erzielen.

Die Gehäuseanordnung 31 kann dabei auch trichterförmig ausgebildet sein, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann.

Um die Oberfläche der Gehäuseanordnung 31 des elektronischen Anbauteils 13 zu vergrößern, weist der zylindrische Abschnitt und/oder der sich axial verjüngenden Abschnitt an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung 31 anordnen zu können. Damit wird eine vergleichsweise thermisch gute Anbindung gewährleistet.

Die Steller- oder Umrichterkomponenten können insbesondere auch ausschließlich im zylindrischen Abschnitt der Gehäuseanordnung 31 angeordnet sein, in diesem Fall wirkt der sich axial verjüngenden Abschnitt 26 als Wärmekapazität, der eine thermisch puffernde Wirkung aufweist. Dieser Abschnitt 26 ist dann als Vollmaterial ausgeführt, der gleichzeitig für den Lüfter 15 die Funktion einer Deckscheibe erfüllt. Damit können axial kürzere Lüfter 15 eingesetzt werden, um so eine kompaktere Bauweise des Antriebs 1 zu erhalten.

Ebenso ist es möglich im elektronischen Anbauteil 13 eine oder mehrere Innenlüfter vorzusehen, die innerhalb des geschlossenen elektronischen Anbauteils 13 zu einem Innenkühlkreislauf führen. Der Innenlüfter ist dabei entweder separat als Fremdlüfter temperaturabhängig ansteuerbar, oder magnetisch mit der Welle 9 gekoppelt, so dass eine Art Eigenbelüftung des elektronischen Anbauteils 13 vorliegt, sobald sich die Welle 9 dreht.

Der Antrieb des Innenlüfters erfolgt über eine magnetische Kopplung von auf der Welle 9 positionierten Magneten und dementsprechend angeordneten Magneten innerhalb des elektronischen Anbauteils 13 beispielsweise auf einer Nabe des Innenlüfters.

Alternativ kann der Innenlüfter seine Antriebsenergie auch dem Drehfeld der dynamoelektrischen rotatorischen Maschine 2, insbesondere dessen Oberschwingungen entnehmen.

Die elektrische Antriebsenergie des Innenlüfter kann auch direkt den Steller- oder Umrichterkomponenten innerhalb des elektronischen Anbauteils 13 entnommen werden.

Die Innenlüfter 20 sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch die beiden Lüfter 15, 20 kann auch zumindest zeitweise auch ein Redundanzbetrieb des Antriebs 1 aufrechterhalten werden, sofern einer der beiden Lüfter 15, 20 ausfallen sollte.

## Patentansprüche

1. Antrieb (1) mit
- zumindest einer dynamoelektrischen rotatorischen Maschine (2), die eine Welle (9) aufweist und von einem Motorgehäuse (10) umgeben ist, das an den Stirnseiten von Lagerschilden (14) begrenzt ist,
- zumindest einem elektronischen Anbauteil (13), das in einer geschlossenen Gehäuseanordnung positioniert ist,
- zumindest einer Lüftereinheit (15),
- wobei diese Komponenten axial hintereinander angeordnet sind, indem das elektronische Anbauteil (13) axial zwischen dynamoelektrischen rotatorischen Maschine (2) und Lüftereinheit (15) angeordnet ist,
- wobei die Lüftereinheit zur Erzeugung von Kühlluftströmen vorgesehen ist,
- einer Lüfterhaube (16), durch welche die Kühlluftströme zumindest teilweise führbar sind,
- wobei zumindest zwischen Gehäuseanordnung und Lüftereinheit und/oder zwischen Gehäuseanordnung und Lagerschild und/oder zwischen Gehäuseanordnung und Welle (9 Freiräume vorgesehen sind,
- wobei im Betrieb der Lüftereinheit (15) aufgrund eines Hauptströmungspfades Lüfterhaube (16), Oberfläche des elektronischen Anbauteils (13) und des Motorgehäuses (10) und mittels des Venturieffekts die Freiräume ebenfalls mit einem Kühlluftstrom beaufschlagbar sind,
**dadurch gekennzeichnet, dass**
- die Lüftereinheit als ein Zwei-Zonen-Lüfter mit einer Nabe (25) ausgeführt ist, die mit der Welle drehfest verbunden ist,
- wobei der Zwei-Zonen-Lüfter eine erste Zone im Bereich der Nabe aufweist, die im Wesentlichen eine axiale Luftströmung generiert und eine zweite radial daran anschließende Zone aufweist, die im Wesentlichen eine radiale Luftströmung generiert,
- wobei zwei unabhängig voneinander angeordnete Lüfterflügelsätze - radiale und axiale Lüfterflügel - vorgesehen sind,
- wobei von der Nabe sich radial angeordnete Lüfterschaufeln (23) erstrecken, die mit ihrer Schmalseite an einer Scheibe (29) angeordnet sind,
- wobei um die Nabe (25) angeordnet sich ein Durchlass (24) befindet, in dem Lüfterelemente (26) angeordnet sind, die über ein Gelenk (27) mit einem elastischen Bereich mit ausreichender Rückstellkraft verfügen, um eine axiale Förderung beizubehalten.

2. Antrieb (1) nach Anspruch 1, **dadurch gekennzeichnet, dass** die Freiräume und/oder die den Hauptströmungspfad flankierenden Komponenten oberflächenvergrößernde Strukturen, insbesondere radial verlaufende Rippen aufweisen.

3. Antrieb (1) nach einem der vorhergehenden Ansprüche, **dadurch gekennzeichnet, dass** das Motorgehäuse (10) zumindest am Außenumfang abschnittsweise Rippen aufweist.

4. Antrieb (1) nach einem der vorhergehenden Ansprüche, **dadurch gekennzeichnet, dass** das elektronische Anbauteil (13) Komponenten aufweist, die als Steller oder Umrichter ausgeführt sind,

5. Antrieb (1) nach einem der vorhergehenden Ansprüche, **dadurch gekennzeichnet, dass** die Gehäuseform der Gehäuseanordnung (31) zylindrisch oder trichterförmig ausgebildet ist und die Oberfläche des Gehäuses des elektronischen Anbauteils (13) oberflächenvergrößernde Maßnahmen an der Gehäuseanordnung (31) umfasst, welche zur Kühlung des elektronischen Anbauteils (13) beitragen und/oder einer oder mehrere Innenlüfter im elektronischen Anbauteil (13) vorgesehen sind, die innerhalb des geschlossenen elektronischen Anbauteils (13) einen Innenkühlkreislauf bilden.

## Claims

1. Drive (1) comprising
- at least one dynamoelectric rotary machine (2), which has a shaft (9) and is surrounded by a motor housing (10), which is bounded at the end faces by bearing shields (14),
- at least one electronic attachment component (13), which is positioned in a closed housing arrangement,
- at least one fan unit (15),
- wherein these components are arranged axially one behind the other in that the electronic attachment component (13) is arranged axially between the dynamoelectric rotary machine (2) and the fan unit (15),
- wherein the fan unit is configured to generate cooling air flows,
- a fan shroud (16), through which the cooling air flows are at least partially guidable,
- wherein free spaces are provided at least between the housing arrangement and the fan unit and/or between the housing arrangement and the bearing shield and/or between the housing arrangement and the shaft (9),
- wherein, in operation of the fan unit (15), due to a main flow path formed by the fan shroud (16), the surface of the electronic attachment component (13), and the motor housing (10), and by means of the Venturi effect, the free spaces are likewise able to be supplied with a cooling air flow,
**characterized in that**
- the fan unit is configured as a two-zone fan having a hub (25), which is non-rotatably connected to the shaft, wherein the two-zone fan has a first zone in the region of the hub, which substantially generates an axial air flow, and a second zone radially adjoining thereto, which substantially generates a radial air flow,
- wherein two independently arranged fan blade sets - radial fan blades and axial fan blades - are provided,
- wherein fan blades (23) extending radially from the hub are arranged with their narrow side on a disk (29),
- wherein a passage (24) is arranged around the hub (25), in which fan elements (26) are arranged, which have a joint (27) having an elastic region with sufficient restoring force in order to maintain axial air conveyance.

2. Drive (1) according to claim 1, **characterized in that**
the free spaces and/or the components flanking the main flow path have surface-enlarging structures, in particular radially extending ribs.

3. Drive (1) according to one of the preceding claims, **characterized in that** the motor housing (10) has ribs at least in sections along the outer circumference.

4. Drive (1) according to one of the preceding claims, **characterized in that** the electronic attachment component (13) has components configured as controllers or converters.

5. Drive (1) according to one of the preceding claims, **characterized in that** the housing shape of the housing arrangement (31) is configured cylindrically or funnel-shaped, and the surface of the housing of the electronic attachment component (13) comprises surface-enlarging structures on the housing arrangement (31), which contribute to cooling the electronic attachment component (13), and/or one or more internal fans are provided in the electronic attachment component (13), which form an internal cooling circuit within the closed electronic attachment component (13).

## Revendications

1. Entraînement (1) avec
- au moins une machine tournante dynamoélectrique (2) dotée d'un arbre (9) et entourée d'un boîtier de moteur (10) délimité aux extrémités par des flasques de palier (14),
- au moins un module électronique (13) placé dans un boîtier fermé,
- au moins une unité de ventilation (15),
- dans lequel ces composants sont disposés axialement les uns derrière les autres, le module électronique (13) étant placé axialement entre la machine tournante dynamoélectrique (2) et l'unité de ventilation (15),
- dans lequel l'unité de ventilation est destinée à générer des flux d'air de refroidissement,
- un carénage de ventilateur (16) à travers lequel les flux d'air de refroidissement peuvent être au moins partiellement dirigés,
- dans lequel des espaces libres sont prévus au moins entre l'ensemble boîtier et l'unité de ventilation et/ou entre l'ensemble boîtier et le flasque de palier et/ou entre l'ensemble boîtier et l'arbre (9),
- dans lequel, lorsque l'unité de ventilation (15) est en marche, un flux d'air de refroidissement peut également circuler dans les espaces libres par la biais d'un trajet d'écoulement principal, du capot de ventilation (16), de la surface du module électronique (13) et du boîtier du moteur (10), ainsi qu'à l'effet Venturi,
**caractérisé en ce que**
- l'unité de ventilation est conçue comme un ventilateur à deux zones avec un moyeu (25) relié à l'arbre de manière solidaire en rotation. Le ventilateur à deux zones comporte une première zone au niveau du moyeu, qui génère essentiellement un flux d'air axial, et une deuxième zone qui lui est adjacente radialement et qui génère essentiellement un flux d'air radial,
- dans lequel deux jeux d'ailettes de ventilateur, radiales et axiales, sont prévus et disposés indépendamment l'un de l'autre,
- dans lequel des pales de ventilateur (23) disposées radialement partent du moyeu et sont fixées par leur côté étroit à un disque (29),
- dans lequel, un passage (24) est situé autour du moyeu (25), dans lequel sont disposés des éléments de ventilation (26) dotés d'une articulation (27) comportant une zone élastique avec une force de rappel suffisante pour maintenir un refoulement axial.

2. Entraînement (1) selon la revendication 1, **caractérisé en ce que**
les espaces libres et/ou les composants qui bordent le trajet d'écoulement principal présentent des structures qui augmentent la surface, en particulier des nervures radiales.

3. Entraînement (1) selon l'une des revendications précédentes, **caractérisé en ce que** le boîtier du moteur (10) présente des nervures au moins sur certaines parties de sa circonférence extérieure.

4. Entraînement (1) selon l'une des revendications précédentes, **caractérisé en ce que** le module électronique (13) comporte des composants conçus comme des variateurs ou des onduleurs.

5. Entraînement (1) selon l'une des revendications précédentes, **caractérisé en ce que** la forme du boîtier de l'ensemble boîtier (31) est cylindrique ou en forme d'entonnoir et que la surface du boîtier du module électronique (13) comporte des éléments qui augmentent la surface de l'ensemble boîtier (31) et contribuent au refroidissement du module électronique (13) et/ou qu'un ou plusieurs ventilateurs internes sont prévus dans le module électronique (13), formant ainsi un circuit de refroidissement interne à l'intérieur du module électronique (13) fermé.
